# EUROPEAN PATENT APPLICATION

(11) **EP 2 783 657 A2**
(43) Date of publication of application: **01.10.2014**
(21) Application number: 14160667.3
(22) Date of filing: 19.03.2014
(51) Int. Cl.: A61C 8/00, A61C 9/00, A61C 13/34

(54) **Scanning instrument and method of obtaining information about embedded position of an analog**

(30) Priority: 29.03.2013 JP 2013074674
(71) Applicant: GC Corporation, Bunkyo-ku Tokyo 113-0033 (JP)
(72) Inventor: Miyoshi, Ai, Tokyo, Tokyo 174-8585 (JP)
(74) Representative: Beck Greener

(57) **Abstract**

Provided is a scanning instrument that can obtain information about position and inclination of a central axis of an implant fixture used for an implant bridge with a high accuracy. A scanning instrument (10, 110) to be attached to an analog (20) that is embedded in a model, the scanning instrument comprising a main body (11, 111) having a cylindrical shape, a fixation member (12) to attach the main body to the analog, and a reference point (13) to obtain information about position and inclination of a central axis of the analog by using a pattern projection method.

## Description

The present invention relates to a scanning instrument and method of obtaining information about embedded position of an analog.

In embodiments, the present invention relates to a scanning instrument used in a dental field, to specify a location of an embedded artificial tooth root (generally, the artificial tooth root sometimes being referred to as an implant fixture or an implant body).

In the dental field, as a prosthesis method for a defective tooth, a so-called dental implant technique has been largely applied. The application of an implant by the dental implant technique has a lot of advantages since it is possible to make a state of the defective tooth closer to that of a natural tooth comparing with a conventional dental prosthesis treatment.

Treatment using the implant is carried out basically by the following steps. Namely, a hole is formed on a jaw bone having a tooth defective site where the implant is to be applied to thereby embed an implant fixture. After the embedded implant fixture is sufficiently integrated to the jaw bone, an abutment that is a member to fixate a dental prosthesis to the embedded implant fixture is attached, then the dental prosthesis is disposed to the abutment.

The abutment is designed and produced with respect to each patient, in accordance with a depth or a facing direction of the embedded implant fixture, and conditions of oral cavity of the patient. In this case, since the abutment needs to be made corresponding to a state of the embedded implant fixture, before making the abutment, there is a need to know how the implant fixture is embedded. Because of this, using an impression coping, information about an embedded posture (depth and the facing direction) of the embedded implant fixture is transferred to a plaster model (analog model) in which an analog (replica of the implant fixture) is embedded. Then the information about the implant fixture is obtained by the analog model, and thereby the abutment is produced. Nowadays, the abutment is produced by an automatic cutting work using a three-dimensional data of shape of the abutment, thus an abutment having a complicated shape can be produced with a good accuracy. Therefore, in order to obtain a three-dimensional data of shape for the work, there is a need to obtain a three-dimensional data of shape including a shape of required site in an oral cavity of person, and the information about the posture of the embedded implant fixture such as depth or inclination. However, the information about the posture of the implant fixture (depth or inclination) is transferred to the analog, and since the analog is embedded inside the analog model, the information about the posture of the implant fixture cannot be obtained as a three-dimensional data of shape as it is. In order to deal with this, a scanning jig that is attached to an embedded analog in a manner to extend the analog to thereby being disposed in a manner that one end thereof is projected from the analog model. That is, the scanning jig is attached coaxially with the analog, and an end portion of the scanning jig that is not being connected to the analog is exposed in a manner to project from the analog model, therefore it is possible to obtain information about direction and position of the analog. Then, by carrying out a three-dimensional measurement to the analog model to which the scanning jig is attached, to thereby obtain a three-dimensional data of shape, it is possible to obtain the facing direction in a longitudinal direction of the embedded analog on an extension of the scanning jig, and position information of the analog from a position of the end portion of the scanning jig (see Patent Documents 1 (Japanese Patent Application Laid-Open (JP-A) No. 2012-115668), and 2 (Japanese Patent Application Laid-Open (JP-A) No. 2012-518502) for example).

In a conventional scanning jig including Patent Documents 1 and 2, a three-dimensional measurement with a higher accuracy is required. Particularly, in producing an implant bridge, since a plurality of implant fixtures are linked at an upper structure, if the plurality of implant fixtures are interfere with each other to create a force in an undesirable direction, which might cause the plurality of implant fixtures to drop off from the jaw bone. Therefore, the implant bridge needs to be made with a higher accuracy. Because of this, considering a property of the implant bridge, information about rotation direction of each of the implant fixtures is not required, but information about position and inclination of a central axis of each of the implant fixtures are required to be measured with a higher accuracy than that of an implant to be disposed individually.

Accordingly, considering the above problems, an object of the present invention is to provide a scanning instrument capable of obtaining information about position and inclination of a central axis of an implant fixture for an implant bridge with a high accuracy.

The present invention will be described below. In order to make the present invention easy to understand, reference numerals given in the accompanying drawings are shown here in parentheses. However, the present invention is not limited to this.

According to a first aspect of the present invention, there is provided a scanning instrument to be attached to an analog that is embedded in a model, the scanning instrument comprising: a main body having a cylindrical shape; a fixation member to attach the main body to the analog; and a reference point to obtain information about position and inclination of a central axis of the analog by using a pattern projection method.

In an embodiment, the reference point is related to the information about position and inclination of a central axis of the main body.

In an embodiment, the scanning instrument according to the first or second aspect, wherein the reference point is to be disposed to the model.

In an embodiment, the scanning instrument according to any one of the first to third aspects, wherein the reference point is to be disposed to the main body.

According to a second aspect of the present invention, there is provided a method of obtaining information about embedded position of an analog embedded in a model, the method comprising: to the analog, coupling a scanning instrument having a main body and a reference point; using a pattern projection method, determining the position of the main body; and from the determined position of the main body, determining the embedded position of the analog.

In an embodiment determining the position comprises determining the embedded depth and direction of the analog.

In an embodiment the method comprises forming an abutment for engagement with an embedded implant based on the determined position of the analog.

In an embodiment determining the direction of the analog comprises determining the inclination of the central axis of the analog.

In an embodiment the pattern projection method comprises projecting patterned light on to the scanning instrument to thereby determine a three-dimensional coordinate for a reference point on the scanning instrument.

By inserting the scanning instrument into an analog having information about an embedded posture of an implant fixture to thereby carry out a measurement including a reference point, it is possible to obtain information about the embedded posture of the analog, that is, position and inclination of a central axis of the implant fixture, with a good accuracy.

Embodiments of the present invention will now be described in detail with reference to the accompanying drawings, in which:
Fig. 1 is a perspective view of a scanning instrument 10 according to one embodiment;
Fig. 2 is a cross-sectional view of the scanning instrument 10 in an axis direction;
Fig. 3 is a flowchart to illustrate producing steps of an abutment;
Fig. 4 is a flowchart to illustrate producing steps of an analog model;
Fig. 5 is a flowchart to illustrate making steps of a three-dimensional data;
Fig. 6 is a view to illustrate attaching steps of a scanning instrument;
Fig. 7 is another view to illustrate the attaching steps of the scanning instrument;
Fig. 8 is a perspective view to illustrate a scanning instrument 110 according to another embodiment;
Fig. 9 is a view in which the scanning instrument 110 according to said another embodiment is attached to the analog.

The functions and benefits of the present invention will be apparent from the following description of modes for carrying out the invention. Hereinafter, the invention will be described based on embodiments shown in the drawings. However, the invention is not limited by these embodiments.

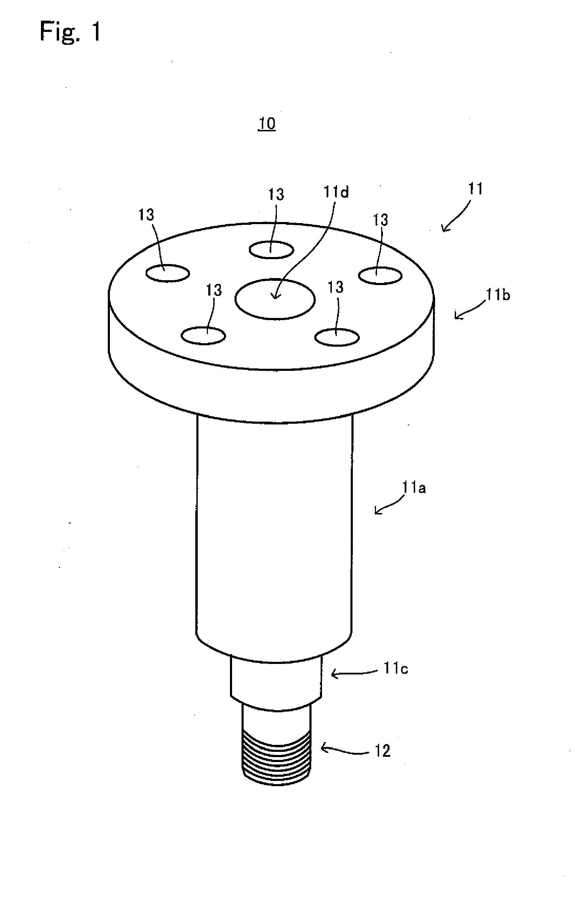

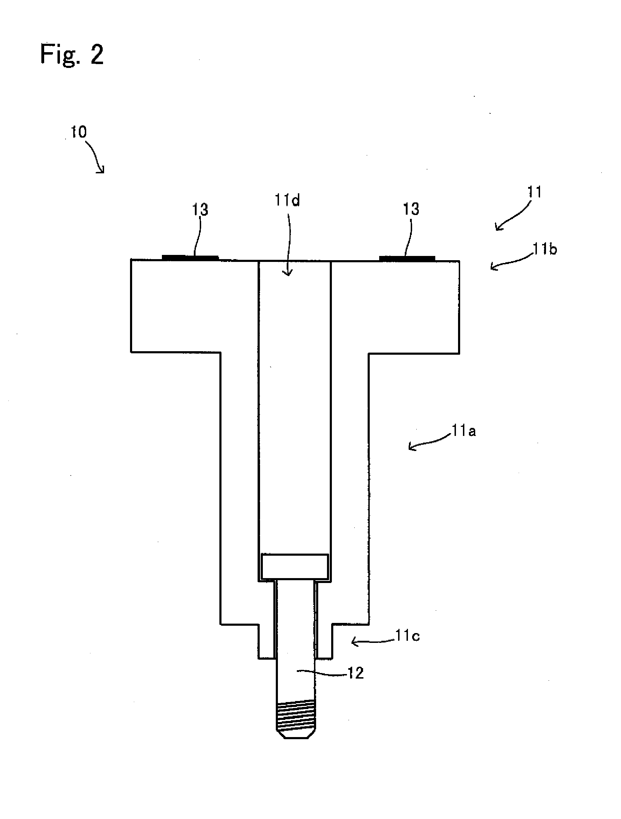

Fig. 1 is a perspective view of an appearance of a scanning instrument 10 according to one embodiment. In Fig. 2, a cross-sectional view of the scanning instrument 10 in an axis direction is shown. As can be seen from Figs. 1 and 2, the scanning instrument 10 includes a main body 11, a fixation member 12, and a reference point 13.

The main body 11 includes a base portion 11a having a cylindrical shape, an extended portion 11b having a discoid shape and provided on a side of one end of the base portion 11a, in a manner to be coaxial with the base portion 11a, and an engaging portion 11c provided on the base portion 11 a on the opposite side to the extended portion 11b. The main body 11 is configured such that a diameter of a hole 11d formed inside the base portion 11a having a cylindrical shape is smaller at an end portion on a side of the engaging portion 11c than that of the hole at other portion.

The extended portion 11 b is formed in a discoid shape, and a diameter of the discoid of the extended portion 11b is configured to be larger than a diameter of cylindrical shape of the base portion 11a. In this embodiment, an upper face side of the extended portion 11 b is formed wide so that a lot of reference points 13 can be formed.

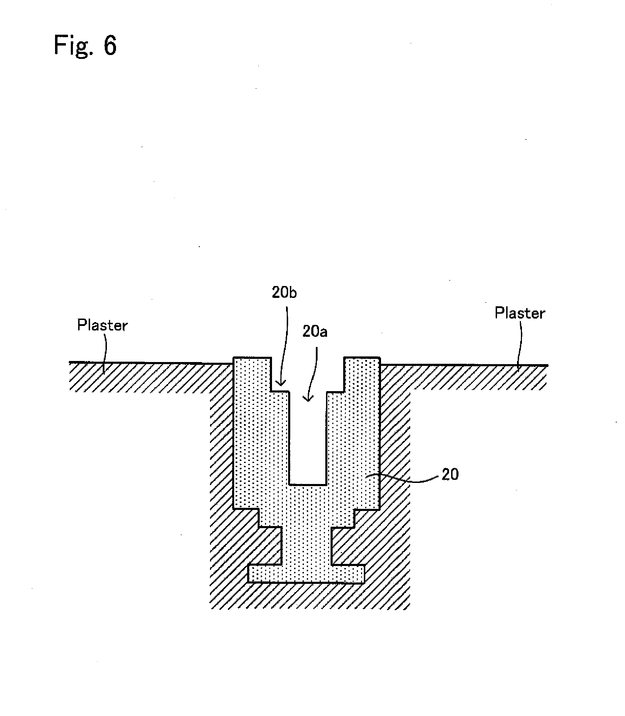

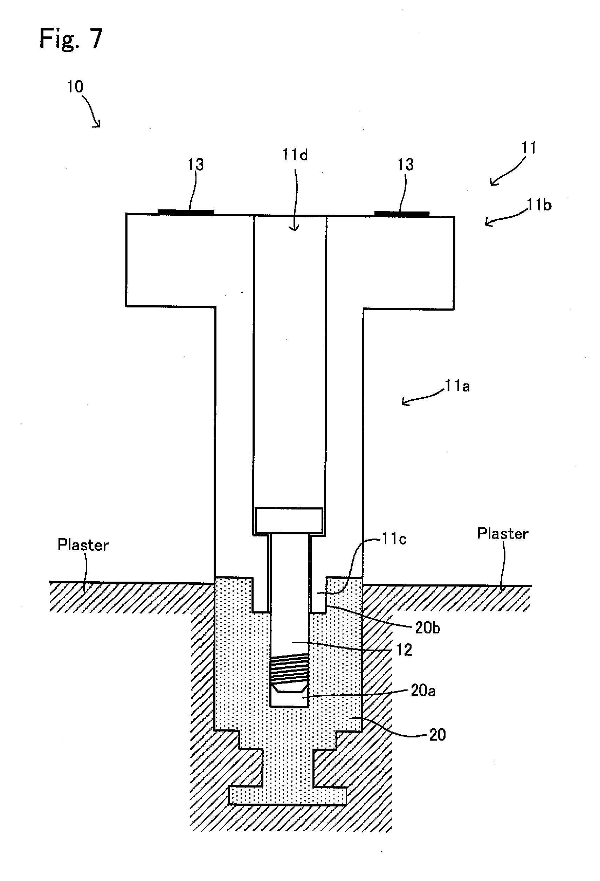

The engaging portion 11c is a portion configured to be paired and connected with an analog 20 (see Figs. 6 and 7) as mentioned below.

The main body 11 is made of a metal or a resin that is a material having a high processing accuracy and property sustaining the accuracy. Further, it is preferable to be made of a material that does not cause a malfunction to a measurement device. The fixation member 12 is a member to be inserted inside the hole 11d of the main body 11 having a cylindrical shape, and in that case, one end portion thereof is projected from an end face of the engaging portion 11c of the main body 11. On the projected end portion, a screw groove to be screwed with the analog 20 is formed. Meanwhile, an end portion thereof on the side to be contained in the hole 11d is configured to have an enough large diameter not to pass through the hole 11d. Because of this, the fixation member 12 is hold in the main body 11.

The reference point 13 is a point to be a reference when a measurement based on a pattern projection method is carried out, with a state in which the scanning instrument 10 is disposed to the analog of the analog model, as mentioned below. In this embodiment, the reference point 13 is related to position and inclination of a central axis of the main body 11 in advance so that the position and inclination of the central axis of the main body 11 can be obtained from the position of the reference point 13. Therefore, it is preferable that three or more of reference points 13 are arranged and the reference points 13 are disposed such that area made by being surrounded by the reference points is as large as possible. Here, as the pattern projection method, a known method in a three-dimensional measurement can be applied. That is, a method in which pattern light is projected to an object to thereby measure a surface shape of the object and obtain a three-dimensional coordinate of the reference point that is in projection image. In this embodiment, five reference points 13 are disposed in a manner to surround the hole 11d on a face opposite to the base portion 11a of the extended portion 11b of the main body 11. In this embodiment, since the extended portion 11 b has a wide face, it is possible to provide a lot of reference points 13 covering a wide area. Here, the number of the reference points was five. However, the number of the reference points is not limited to this, but can be adequately changed. According to the scanning instrument 10 as mentioned above, it is possible to attach the scanning instrument 10 to the analog in the analog model, as mentioned below. This makes the scanning instrument 10 disposed in a manner to be projected from the analog model in a direction of extending the analog embedded inside the analog model. By carrying out a measurement to the reference point 13 in a portion projected from the analog by a pattern projection method, it is possible to obtain an embedded position of the analog. Since the analog has posture information of the implant fixture, it is also possible to obtain an embedded posture of the implant fixture.

The reference point 13 is related to the position and inclination of a central axis of the main body 11 in advance. This makes it possible to obtain a posture of the main body 11, that is, a posture of the analog with a good accuracy. Here, in this embodiment, since the extended portion 11 b is wide, it is possible to dispose a lot of reference points 13 over wide area, to thereby improve measurement accuracy.

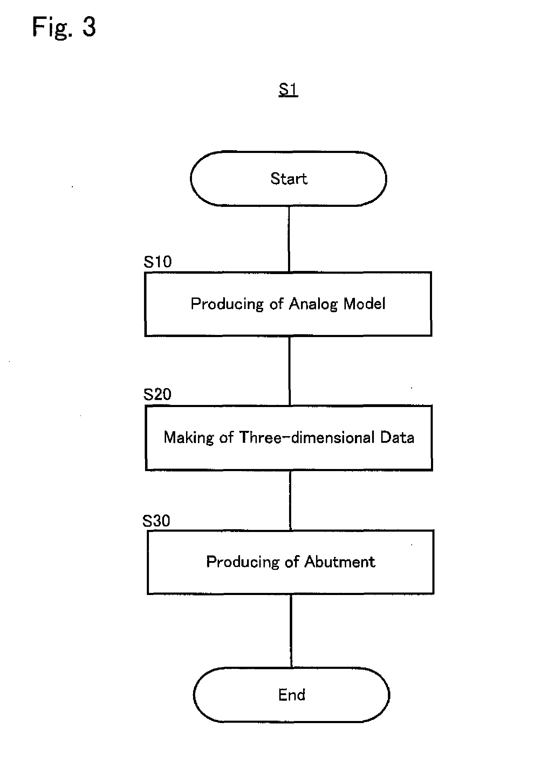

Next, an abutment producing method S1, as an example of a method of producing an abutment using the scanning instrument 10, will be described. The present method is a method of producing an abutment using an analog model. Steps of the abutment producing method S1 are shown in Fig. 3. As shown in Fig. 3, the abutment producing method S1 includes: an analog model producing step S10; a three-dimensional data making step S20; and an abutment producing step S30. Each of the steps will be described below.

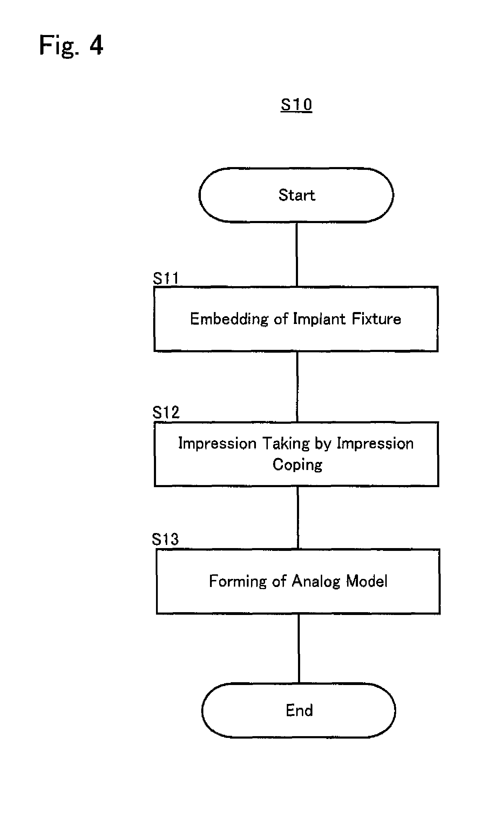

The analog model producing step S10 is a step to produce an analog model in which the analog 20 is embedded. A known step can be applied to this. Fig. 4 shows an example of flow of the analog model producing step S10. That is, the analog model producing step S10 has; an implant fixture embedding step S11; an impression taking step S12 by using an impression coping; and an analog model forming step S13.

The implant fixture embedding step S11 is a step to form a hole for embedding an implant fixture in a jaw bone having a defective site of tooth, and embed the implant fixture into the hole. The impression taking step S12 is a step to take an impression by using an impression coping after the embedded implant fixture is sufficiently integrated to the jaw bone. Impression taking by using an impression coping can be carried out by a known method. The analog model forming step S13 is a step to attach the analog to the impression obtained by the impression taking step S12 by using an impression coping and the impression coping in the impression, to thereby produce a plaster model. That is, an analog model that is a plaster model in which the analog is embedded is formed. Arrangement of the implant fixture in a patient is transferred to the analog in the analog model with a good accuracy.

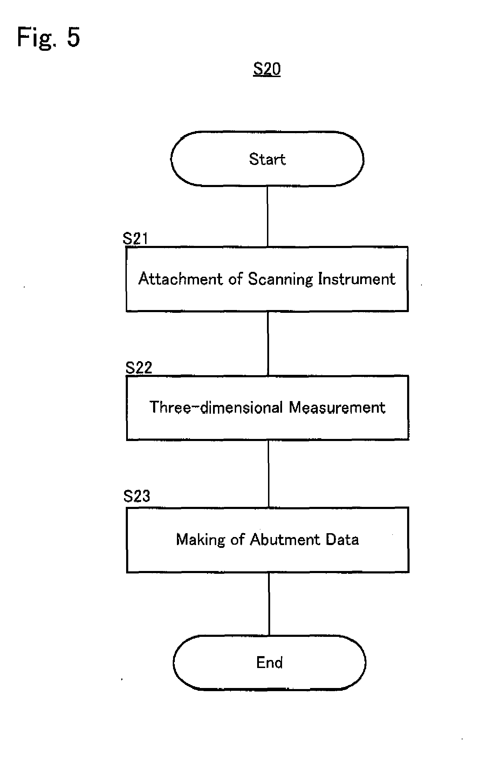

Explanation is continued back to Fig. 3. The three-dimensional data making step S20 is a step to make a three-dimensional data of shape of an abutment to be produced. The three-dimensional data making step S20 can be carried out as shown in Fig. 5 for example. In Fig. 5, a flow of the three-dimensional data making step S20 is shown. That is, the three-dimensional data making step S20 includes: a scanning instrument attaching step S21; a three-dimensional measuring step S22; and an abutment data making step S23.

The scanning instrument attaching step S21 is a step to attach the scanning instrument 10 described above to the analog modal produced in the analog model producing step S10. Figs. 6 and 7 schematically show the step S21.

A configuration of the analog 20 embedded in an analog model is schematically shown in Fig. 6. The analog 20 is a member formed in a cylindrical shape having a basement only to one side thereof. A hollow portion 20a is formed inside the analog 20. The hollow portion 20a is formed such that the fixation member 12 of the scanning instrument 10 can engage thereto. Also, in an end portion on open side of the hollow portion 20a, an engaging object portion 20b in which the engaging portion 11c of the scanning instrument 10 is to be inserted is provided. An outer periphery of the analog 20 is formed to have asperity on its surface, in view of preventing from coming off from plaster. As can be seen from Fig. 6, the analog 20 as described above is embedded in the plaster that configures an appearance shape of the analog model, and from the appearance of the analog model, embedded angle and embedded depth of the analog 20 cannot be observed.

To the analog 20 disposed to the analog model as described above, the main body 11 of the scanning instrument 10 is to be attached by the fixation member 12, by engaging the fixation member 12 projected from the main body 11 to the hollow portion 20a. At this time, the engaging portion 11 c of the main body 11 is fitted to the engaging object portion 20b of the analog 20.

As described above, the scanning instrument 10 is disposed in a manner to be projected from the analog model in a direction extending the analog 20 that is embedded in the analog model, to thereby form the analog 20 to which the scanning instrument 10 is attached. This makes it possible to lead the embedded posture of the analog 20. At this time, it is preferable that a model of gum portion in the analog model is removed.

Explanation is continued back to Fig. 5. The three-dimensional measuring step S22 is a step to carry out a three-dimensional measurement to a shape of the analog model to which the scanning instrument 10 is attached by using a pattern projection method. Undergoing the step S22, the shape of the analog model is obtained as a three-dimensional data, and at the same time, position information of the reference point 13 on the scanning instrument 10 that is attached to the analog model is obtained. As described above, since the reference point 13 is related to the position and inclination of the central axis of the main body 11, it is possible to obtain information about position and inclination of the central axis of the main body 11 from the reference point 13.

The abutment data making step S23 is a step to make a three-dimensional data of shape of an appropriate abutment for the patient based on the three-dimensional data of shape of the analog model. Since the position and inclination of the analog, that is, the position and inclination of the central axis of the implant fixture, is obtained with a good accuracy, such improvement of accuracy is appropriately reflected to the abutment data, and thus it is possible to make a data of the abutment that is more matched to the patient.

Explanation of the abutment producing method S1 will be continued back to Fig. 3. The abutment producing step S30 is a step to produce an abutment, based on the three-dimensional data of shape made in the above three-dimensional data making step S20. In this step, a known method can be applied. For instance, by providing the three-dimensional data of shape to a NC machine tool such as a machining center, it is possible to produce an abutment with a high accuracy.

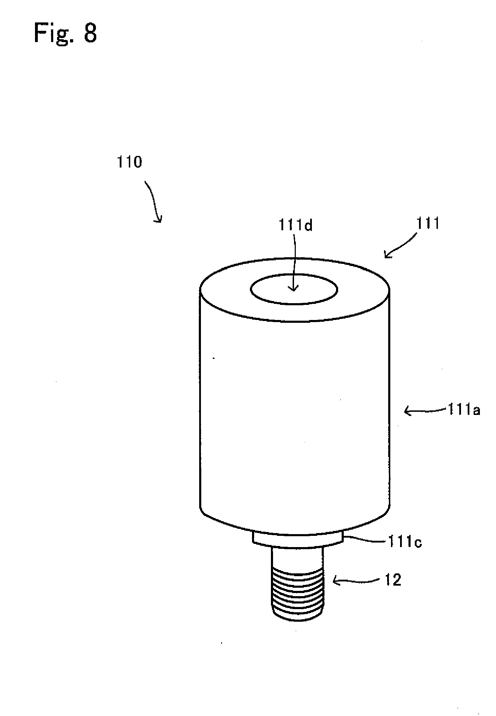

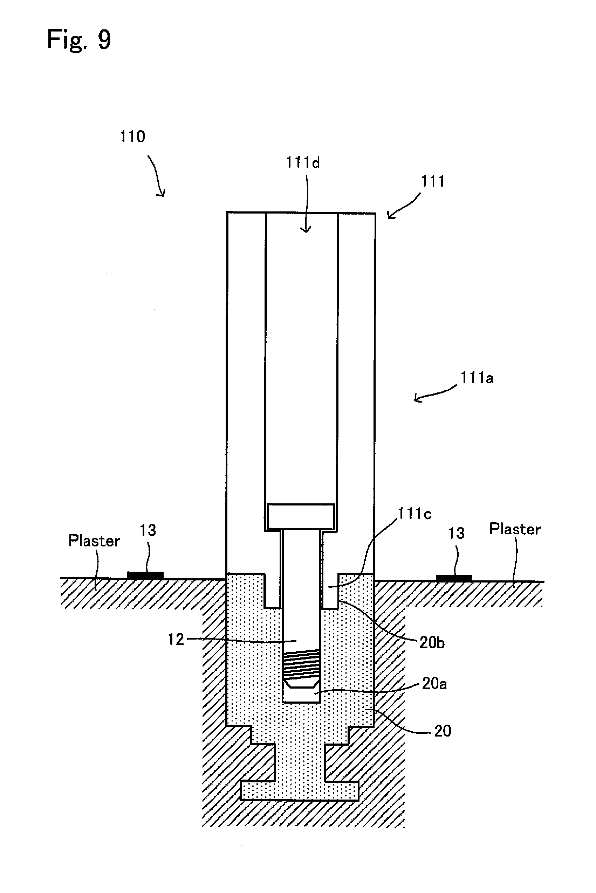

Fig. 8 is a perspective view to describe a scanning instrument 110 according to another embodiment, and Fig. 9 is a view showing a state in which the scanning instrument 110 is attached to the analog modal 20, which is seen from the same viewpoint as that of Fig. 7. The scanning instrument 110 of this embodiment comprises: a main body 111; the fixation member 12; and the reference point 13.

The main body 111 includes a base portion 111a having a cylindrical shape and an engaging portion 111 c provided on an end portion of the base portion 111, which is to be fitted with the analog 20. A hole 111 d is configured inside the base portion 111 a having a cylindrical shape, such that an end portion of a diameter of the hole on a side of the engaging portion 111 c is smaller than that of the other portion. Also, in this embodiment, an end portion of the base portion 111 a, the end portion being on a side where the engaging portion 111 c is not disposed is surfaced and formed flat.

The engaging portion 111c is a portion configured to be paired and connected with the engaging object portion 20b of the analog 20.

The fixation member 12 is as mentioned above.

In this embodiment, the reference point 13 is used as a standard of data synthesis when the measurement is carried out by using a method based on a pattern projection method, in a state in which the scanning instrument 110 is disposed to the analog 20 of the analog model as above. In this embodiment, as can be seen from Fig. 9, a plurality of reference points 13 are disposed on a surface of the analog model. The number of the reference point 13 is not limited but can be adequately changed.

According to the scanning instrument 110 as described above, it is possible to attach the scanning instrument 110 to the analog 20 in the analog model, as shown in Fig. 9. This makes it possible to dispose the scanning instrument 110 in a manner to be projected from the analog model in a direction extending the analog embedded inside the analog model. And by measuring the main body 111 in a portion that is projected, it becomes possible to obtain an embedded posture of the analog. Since the analog 20 includes information about an embedded posture of the implant fixture, it is possible to obtain information of the implant fixture.

In the scanning instrument 110 of this example, three-dimensional measurement is carried out as described below. That is, the step S20 described above is carried out as follows. In this example as well, the measurement is carried out based on a pattern projection method to obtain position and inclination of a central axis of the main body 111 of the scanning instrument 110. At this time, in this example, shapes of an end face and an outer periphery of the main body 111 are measured, and based on the measurement, the position and inclination of a central axis of the main body 111 are obtained. Meanwhile, spatial position of the main body 111 is identified by the reference point 13.

As shown above, in this example, since a posture of a central axis of the scanning instrument 110 having a cylindrical shape is obtained by using shapes of one end face and an outer periphery of the scanning instrument 110, The information is based on large area. Therefore, it is possible to decide the central axis of the implant fixture with a higher accuracy than before.

Embodiments of the present invention have been described with particular reference to the examples illustrated. However, it will be appreciated that variations and modifications may be made to the examples described within the scope of the present invention.

## Claims

1. A scanning instrument to be attached to an analog that is embedded in a model, the scanning instrument comprising:
a main body having a cylindrical shape;
a fixation member to attach the main body to the analog; and
a reference point to obtain information about position and about inclination of a central axis of the analog by a pattern projection method.

2. The scanning instrument according to claim 1,
wherein the reference point is related to the information about position and about inclination of a central axis of the main body.

3. The scanning instrument according to claim 1 or 2,
wherein the reference point is to be disposed to the model.

4. The scanning instrument according to any one of claims 1 to 3,
wherein the reference point is to be disposed to the main body.

5. A method of obtaining information about embedded position of an analog embedded in a model, the method comprising:
to the analog, coupling a scanning instrument having a main body and a reference point;
using a pattern projection method, determining the position of the main body; and
from the determined position of the main body, determining the embedded position of the analog.

6. A method according to claim 5, wherein determining the position comprises determining the embedded depth and direction of the analog.

7. A method according to claim 5 or 6, wherein the method comprises forming an abutment for engagement with an embedded implant based on the determined position of the analog.

8. A method according to claim 6, wherein determining the direction of the analog comprises determining the inclination of the central axis of the analog.

9. A method according to any of claims 5 to 8, wherein the pattern projection method comprises projecting patterned light on to the scanning instrument to thereby determine a three-dimensional coordinate for a reference point on the scanning instrument.
